# EUROPEAN PATENT APPLICATION

(11) **EP 4 138 288 A1**
(43) Date of publication of application: **22.02.2023**
(21) Application number: 21192383.4
(22) Date of filing: 20.08.2021
(51) Int. Cl.: H02M 1/00, H02M 1/36, H02M 7/00, H02M 1/32

(54) **POWER SUPPLY ASSEMBLY**

(71) Applicant: ABB SCHWEIZ AG, 5400 Baden (CH)
(72) Inventor: Apeldoorn, Oscar, 5300 Turgi (CH); Paatero, Esa-Kai, 00380 Helsinki (FI); Notari, Nicola, 5400 Baden (CH)
(74) Representative: Kolster Oy Ab

(57) **Abstract**

A power supply assembly comprising a first alternating current connection (71; 41), a DC link (2) comprising a link capacitor system (3), a first converter (81; 82) connected electrically between the DC link (2) and the first alternating current connection (71; 41), and a first alternating current filter (581; 582) connected electrically between the first alternating current connection (71; 41) and the first converter (81; 82). The power supply assembly (101) is adapted to synchronize a voltage of the first alternating current filter (581; 582) with a voltage present at the first alternating current connection (71; 41) before electrically connecting the first alternating current filter (581; 582) to the first alternating current connection (71; 41), the synchronization being realized by means of the first converter (81; 82) powered by the DC link (2).

## Description

### FIELD OF THE INVENTION

The present invention relates to a power supply assembly.

### BACKGROUND OF THE INVENTION

A known uninterruptible power supply (UPS) comprises a DC link, a converter, an alternating current filter, and an alternating current connection such that the converter is adapted to supply power from the DC link to the alternating current connection through the alternating current filter.

One of the problems associated with the above known uninterruptible power supply is that in a situation where the DC link is uncharged or has a low charge, connecting an alternating current system to the converter through the alternating current connection creates a very large and potentially destructive inrush current from the alternating current system to the DC link, and at the same time capacitors of the alternating current filter are charged extremely fast to a voltage of the alternating current system.

### BRIEF DESCRIPTION OF THE INVENTION

An object of the present invention is to provide a power supply assembly so as to solve the above problems. The objects of the invention are achieved by a power supply assembly which is characterized by what is stated in the independent claim. The preferred embodiments of the invention are disclosed in the dependent claims.

The invention is based on the idea of synchronizing a voltage of an alternating current filter with a voltage of an alternating current system before electrically connecting the alternating current filter to the alternating current system, wherein the synchronization is realized by means of a converter connected to the alternating current filter, and powered by a DC link pre-charged relatively slowly in advance.

An advantage of the power supply assembly of the invention is that controlling a switch between the alternating current system and the alternating current filter to a conducting state only creates a small current, if any, through the alternating current filter and the converter since the DC link is already charged and there is no significant voltage difference between the alternating current system and capacitors of the alternating current filter.

### BRIEF DESCRIPTION OF THE DRAWINGS

In the following the invention will be described in greater detail by means of preferred embodiments with reference to the attached drawings, in which
Figure 1 shows a simplified circuit diagram of a power supply assembly according to an embodiment of the invention; and
Figure 2 shows a simplified circuit diagram of a load converter of the power supply assembly shown in Figure 1.

### DETAILED DESCRIPTION OF THE INVENTION

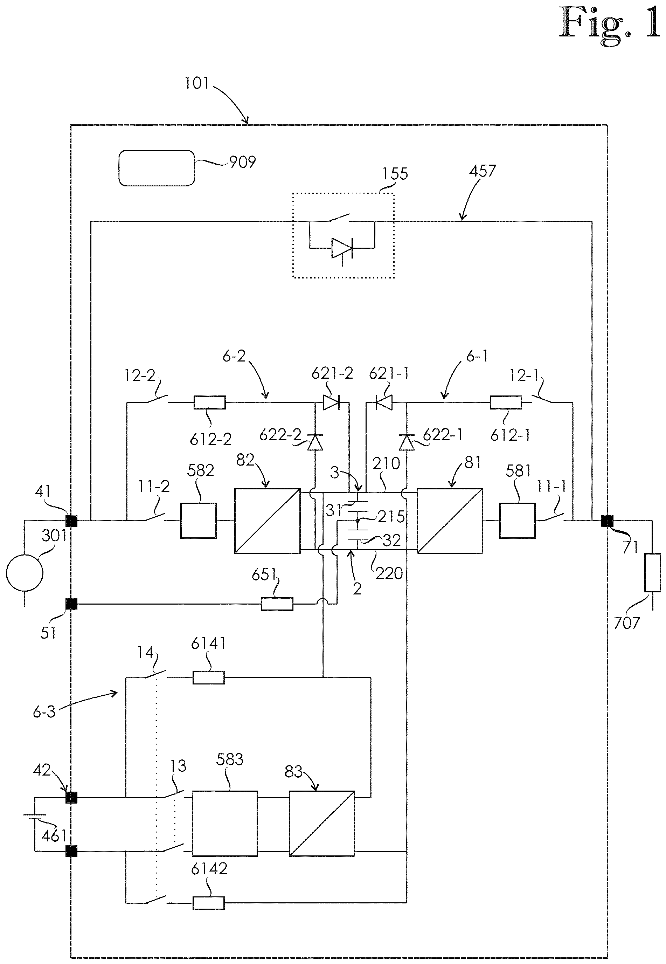

Figure 1 shows a simplified circuit diagram of a power supply assembly 101 comprising a primary source connection 41, a load connection 71, a direct current source connection 42, a DC link 2, a load converter 81, a source converter 82, a direct-current converter 83, and a control system 909.

The primary source connection 41 is adapted to be connected electrically to a primary alternating current supply 301. The load connection 71 is adapted to be connected electrically to an alternating current load 707. There is a bypass route 457 electrically conductively connecting the primary source connection 41 to the load connection 71, and a bypass switch 155 adapted to disconnect the bypass route 457. The direct current source connection 42 is adapted to be connected electrically to a direct current supply 461. The primary source connection 41 and the load connection 71 are three-phase connections.

The DC link 2 comprises a positive bus bar 210, a negative bus bar 220, a midpoint 215, and a link capacitor system 3. The link capacitor system 3 has a first link capacitor 31 connected electrically between the positive bus bar 210 and the midpoint 215, and a second link capacitor 32 connected electrically between the negative bus bar 220 and the midpoint 215.

The midpoint 215 is adapted to be connected to a neutral point of the primary alternating current supply 301 by means of a midpoint connection 51. There is a midpoint current limiting device 651 between the midpoint 215 and the midpoint connection 51. The midpoint current limiting device 651 is a passive current limiting device. In an embodiment, the midpoint current limiting device is a resistor whose resistance is in a range of 50 - 150Ω.

The primary alternating current supply 301 is a three-wire system. In an alternative embodiment, the primary alternating current supply is a four-wire system, and the midpoint of the DC link is connected directly to the midpoint connection, without any midpoint current limiting device.

The load converter 81 is connected electrically between the DC link 2 and the load connection 71. The load converter 81 is adapted for supplying power from the DC link 2 to the load connection 71. There is an alternating current filter 581 connected electrically between the load connection 71 and the load converter 81, and a main switch 11-1 for the load converter 81 connected electrically between the load connection 71 and the alternating current filter 581. The alternating current filter 581 comprises alternating current filter capacitance.

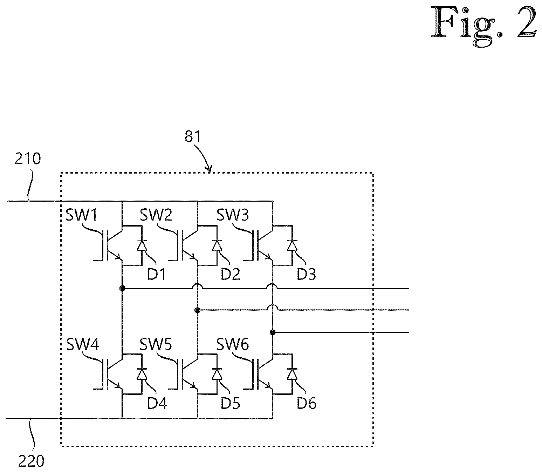

Figure 2 shows a simplified circuit diagram of the load converter 81. The load converter 81 comprises a bridge connection having three legs. Each of the legs has two controllable semiconductor switches and two diodes. There is a diode connected antiparallel with each controllable semiconductor switch. The controllable semiconductor switches are denoted with reference signs SW1 ― SW6, and the diodes are denoted with reference signs D1 ― D6.

The source converter 82 is connected electrically between the DC link 2 and the primary source connection 41. The source converter 82 is adapted for supplying power from the primary source connection 41 to the DC link 2. There is an alternating current filter 582 connected electrically between the primary source connection 41 and the source converter 82, and a main switch 11-2 for the source converter 82 connected electrically between the primary source connection 41 and the alternating current filter 582. The alternating current filter 582 comprises alternating current filter capacitance.

The direct-current converter 83 is connected electrically between the direct current source connection 42 and the DC link 2. The direct-current converter 83 is adapted to supply power from the direct current source connection 42 to the DC link 2. There is a direct current filter 583 connected electrically between the direct current source connection 42 and the direct-current converter 83, and a main switch 13 for the direct-current converter 83 adapted to disconnect the direct current source connection 42 from the direct current filter 583. The direct current filter 583 is located electrically between the direct-current converter 83 and the main switch 13 for the direct-current converter 83. The direct current filter 583 comprises direct current filter capacitance.

The control system 909 is adapted to control the load converter 81, the source converter 82, the direct-current converter 83, the bypass switch 155, the main switch 11-1 for the load converter 81, the main switch 11-2 for the source converter 82, and other switches of the power supply assembly 101. The control system 909 is adapted to provide different modes for the power supply assembly, the modes comprising a double conversion mode, a direct-current supply mode, and an energy saver mode.

In the double conversion mode, the bypass switch 155 is in a non-conducting state, and power is supplied to the load connection 71 from the primary source connection 41 through the source converter 82 and the load converter 81. In the direct-current supply mode, the bypass switch 155 is in a non-conducting state, and power is supplied to the load connection 71 from the direct current source connection 42 through the direct-current converter 83 and the load converter 81. In the energy saver mode, the bypass switch 155 is in a conducting state for supplying power from the primary source connection 41 to the load connection 71.

The control system 909 is adapted to provide a start-up operation comprising pre-charging the link capacitor system 3 while the main switch 11-1 for the load converter 81 and the main switch 11-2 for the source converter 82 are in a non-conducting state, controlling the load converter 81 to generate a preliminary voltage to the alternating current filter 581, controlling the source converter 82 to generate a preliminary voltage to the alternating current filter 582, and controlling the main switch 11-1 for the load converter 81 and the main switch 11-2 for the source converter 82 to conducting states.

During the start-up operation, the link capacitor system 3 is pre-charged to a pre-charge link voltage greater than or equal to 95% of a peak voltage of a power source from which the link capacitor system 3 is pre-charged. In another embodiment, the link capacitor system is pre-charged during the start-up operation to a pre-charge link voltage greater than or equal to 80% of a peak voltage of a power source from which the link capacitor system is pre-charged. If there are multiple power sources from which the link capacitor system is pre-charged, said peak voltage is the highest peak voltage of the multiple power sources. An amplitude and phase of the preliminary voltage for the alternating current filter 581 is close to an amplitude and phase of voltage present at the load connection 71. An amplitude and phase of the preliminary voltage for the alternating current filter 582 is close to an amplitude and phase of voltage present at the primary source connection 41.

In an embodiment, an amplitude and phase of a preliminary voltage of an alternating current filter are close to an amplitude and phase of voltage present at a corresponding alternating current connection if difference between the phases of the voltage present at the alternating current connection and the preliminary voltage is less than or equal to 0.1 radians, and difference between the amplitudes of the voltage present at the alternating current connection and the preliminary voltage is less than or equal to 20%. In another embodiment, an amplitude and phase of a preliminary voltage of an alternating current filter are close to an amplitude and phase of voltage present at a corresponding alternating current connection if difference between the phases of the voltage present at the alternating current connection and the preliminary voltage is less than or equal to 0.05 radians, and difference between the amplitudes of the voltage present at the alternating current connection and the preliminary voltage is less than or equal to 10%.

The pre-charging of the link capacitor system 3 during the start-up operation comprises at least one of the following: supplying power from the load connection 71 to the link capacitor system 3, supplying power from the primary source connection 41 to the link capacitor system 3, and supplying power from the direct current source connection 42 to the link capacitor system 3. In other words, the pre-charging of the link capacitor system 3 can be realized from the load connection 71, from the primary source connection 41, and from the direct current source connection 42. The power supply assembly 101 comprises an alternating current pre-charge circuit 6-1 adapted for pre-charging the link capacitor system 3 from the load connection 71, an alternating current pre-charge circuit 6-2 adapted for pre-charging the link capacitor system 3 from the primary source connection 41, and a direct current pre-charge system adapted for pre-charging the link capacitor system 3 from the direct current source connection 42.

When power is supplied from the primary source connection 41 to the link capacitor system 3 for pre-charging the link capacitor system 3, a power source from which the link capacitor system 3 is pre-charged is the primary alternating current supply 301. When power is supplied from the direct current source connection 42 to the link capacitor system 3 for pre-charging the link capacitor system 3, a power source from which the link capacitor system 3 is pre-charged is the direct current supply 461. When power is supplied from the load connection 71 to the link capacitor system 3 for pre-charging the link capacitor system 3, a power source from which the link capacitor system 3 is pre-charged is the alternating current load 707. However, when the bypass switch 155 is in a conducting state, voltages of the primary source connection 41 and the load connection 71 are practically the same, and it can be considered that there are two power sources from which link capacitor system 3 is pre-charged regardless of whether the pre-charging is realized through the source converter 82 and/or through the load converter 81.The alternating current pre-charge circuit 6-1 comprises a pre-charge switch 12-1, a rectification means and a current limiting means 612-1. The rectification means of the alternating current pre-charge circuit 6-1 is adapted to rectify a current supplied from the load connection 71 to the link capacitor system 3, and the current limiting means 612-1 is adapted to limit the current supplied from the load connection 71 to the link capacitor system 3. In a conducting state of the pre-charge switch 12-1, the load connection 71 is electrically connected to the link capacitor system 3 through the current limiting means 612-1 and the rectification means of the alternating current pre-charge circuit 6-1.

The rectification means of the alternating current pre-charge circuit 6-1 comprises a first diode device 621-1 connected between the load connection 71 and the positive bus bar 210, and a second diode device 622-1 connected between the load connection 71 and the negative bus bar 220. The current limiting means 612-1 comprises a resistor.

The alternating current pre-charge circuit 6-2 comprises a pre-charge switch 12-2, a rectification means and a current limiting means 612-2. The rectification means of the alternating current pre-charge circuit 6-2 is adapted to rectify a current supplied from the primary source connection 41 to the link capacitor system 3, and the current limiting means 612-2 is adapted to limit the current supplied from the primary source connection 41 to the link capacitor system 3. In a conducting state of the pre-charge switch 12-2, the primary source connection 41 is electrically connected to the link capacitor system 3 through the current limiting means 612-2 and the rectification means of the alternating current pre-charge circuit 6-2.

The rectification means of the alternating current pre-charge circuit 6-2 comprises a first diode device 621-2 connected between the primary source connection 41 and the positive bus bar 210, and a second diode device 622-2 connected between the primary source connection 41 and the negative bus bar 220. The current limiting means 612-2 comprises a resistor.

Both the alternating current pre-charge circuit 6-1 and the alternating current pre-charge circuit 6-2 are single-phase circuits. Each of them comprises exactly one pre-charge switch, exactly one current limiting resistor, and exactly two diodes. During the pre-charging from the load connection 71 and/or the primary source connection 41, a return path for a pre-charging current passes through the midpoint 215 and the midpoint connection 51 to the neutral point of the primary alternating current supply 301.

The pre-charging of the link capacitor system 3 from the load connection 71 comprises controlling the pre-charge switch 12-1 of the alternating current pre-charge circuit 6-1 to a conducting state while the main switch 11-1 for the load converter 81 is in a non-conducting state for pre-charging the link capacitor system 3 from the load connection 71 through the current limiting means 612-1 and the rectification means of the alternating current pre-charge circuit 6-1. After pre-charging of the link capacitor system 3 from the load connection 71, the pre-charge switch 12-1 of the alternating current pre-charge circuit 6-1 is controlled to a non-conducting state.

The pre-charging of the link capacitor system 3 from the primary source connection 41 comprises controlling the pre-charge switch 12-2 of the alternating current pre-charge circuit 6-2 to a conducting state while the main switch 11-2 for the source converter 82 is in a non-conducting state for pre-charging the link capacitor system 3 from the primary source connection 41 through the current limiting means 612-2 and the rectification means of the alternating current pre-charge circuit 6-2. After pre-charging of the link capacitor system 3 from the primary source connection 41, the pre-charge switch 12-2 of the alternating current pre-charge circuit 6-2 is controlled to a non-conducting state.

The direct current pre-charge system comprises a main switch 13 for the direct-current converter 83 adapted to disconnect the direct current source connection 42 from the direct current filter 583, and a direct current pre-charge circuit 6-3 electrically connecting the direct current source connection 42 to the link capacitor system 3. The direct current pre-charge circuit 6-3 comprises a direct current pre-charge switch 14 adapted to disconnect the direct current source connection 42 from the link capacitor system 3, and a direct current limiting means adapted to limit a current supplied from the direct current source connection 42 to the link capacitor system 3 through the direct current pre-charge circuit 6-3. The direct current limiting means comprises a resistor 6141 connected to a positive branch of the direct current pre-charge circuit 6-3, and a resistor 6142 connected to a negative branch of the direct current pre-charge circuit 6-3.

The pre-charging of the link capacitor system 3 from the direct current source connection 42 comprises controlling the direct current pre-charge switch 14 to a conducting state while the main switch 13 for the direct-current converter 83 is in a non-conducting state for pre-charging the link capacitor system 3 from the direct current source connection 42 through the direct current pre-charge circuit 6-3.

The start-up operation comprises, subsequent to pre-charging the link capacitor system 3, controlling the direct-current converter 83 to generate a preliminary direct voltage to the direct current filter 583, controlling the main switch 13 for the direct-current converter 83 to a conducting state, and controlling the direct current pre-charge switch 14 to a non-conducting state. The preliminary direct voltage is greater than or equal to 80% of a voltage present at the direct current source connection 42.

It will be obvious to a person skilled in the art that the inventive concept can be implemented in various ways. The invention and its embodiments are not limited to the examples described above but may vary within the scope of the claims.

## Claims

1. A power supply assembly comprising:
a first alternating current connection (71; 41) adapted to be connected to an alternating current system;
a DC link (2) comprising a positive bus bar (210), a negative bus bar (220), and a link capacitor system (3);
a first converter (81; 82) connected electrically between the DC link (2) and the first alternating current connection (71; 41);
a first alternating current filter (581; 582) connected electrically between the first alternating current connection (71; 41) and the first converter (81; 82), the first alternating current filter (581; 582) comprising first alternating current filter capacitance; and
a control system (909),
**characterized in that** the power supply assembly (101) comprises:
a main switch (11-1; 11-2) for the first converter (81; 82) connected electrically between the first alternating current connection (71; 41) and the first alternating current filter (581; 582),
wherein the control system (909) is adapted to provide a start-up operation comprising:
pre-charging the link capacitor system (3) while the main switch (11-1; 11-2) for the first converter (81; 82) is in a non-conducting state;
controlling the first converter (81; 82) to generate a first preliminary voltage to the first alternating current filter (581; 582), an amplitude and phase of the first preliminary voltage being close to an amplitude and phase of voltage present at the first alternating current connection (71; 41); and
controlling the main switch (11-1; 11-2) for the first converter (81; 82) to a conducting state.

2. A power supply assembly as claimed in claim 1, wherein the power supply assembly (101) comprises a first alternating current pre-charge circuit (6-1; 6-2) adapted for pre-charging the link capacitor system (3) from the first alternating current connection (71; 41), the first alternating current pre-charge circuit (6-1; 6-2) comprises a first pre-charge switch (12-1; 12-2), a first rectification means and a first current limiting means (612-1, 612-2), the first rectification means being adapted to rectify a current supplied from the first alternating current connection (71; 41) to the link capacitor system (3), and the first current limiting means (612-1, 612-2) being adapted to limit the current supplied from the first alternating current connection (71; 41) to the link capacitor system (3), and the DC link (2) comprises a midpoint (215) adapted to be connected to a neutral point of the alternating current system by means of a midpoint connection (51), and the link capacitor system (3) has a first link capacitor (31) connected electrically between the positive bus bar (210) and the midpoint (215), and a second link capacitor (32) connected electrically between the negative bus bar (220) and the midpoint (215), and the pre-charging of the link capacitor system (3) comprises controlling the first pre-charge switch (12-1; 12-2) to a conducting state for pre-charging the link capacitor system (3) from the first alternating current connection (71; 41) through the first current limiting means (612-1, 612-2) and the first rectification means.

3. A power supply assembly as claimed in claim 2, wherein the first rectification means of the first alternating current pre-charge circuit (6-1; 6-2) comprises a first diode device (621-1; 621-2) connected between the first alternating current connection (71; 41) and the positive bus bar (210), and a second diode device (622-1; 622-2) connected between the first alternating current connection (71; 41) and the negative bus bar (220).

4. A power supply assembly as claimed in claim 3, wherein the first alternating current pre-charge circuit (6-1; 6-2) is a single-phase circuit.

5. A power supply assembly as claimed in any one of claims 1 to 4, wherein the first alternating current connection is a load connection (71) adapted to be connected electrically to an alternating current load (707), and the first converter is a load converter (81) connected electrically between the DC link (2) and the load connection (71), the load converter (81) being adapted to supply power from the DC link (2) to the load connection (71).

6. A power supply assembly as claimed in claim 5, wherein the power supply assembly comprises a primary source connection (41) adapted to be connected electrically to a primary alternating current supply (301), and a bypass route (457) electrically conductively connecting the primary source connection (41) to the load connection (71), and a bypass switch (155) adapted to disconnect the bypass route (457), and the control system (909) is adapted to provide an energy saver mode for the power supply assembly in which the bypass switch (155) is in a conducting state for supplying power from the primary source connection (41) to the load connection (71).

7. A power supply assembly as claimed in any one of claims 1 to 6, wherein the power supply assembly (101) comprises:
a direct current source connection (42) adapted to be connected electrically to a direct current supply (461);
a direct-current converter (83) connected electrically between the direct current source connection (42) and the DC link (2), the direct-current converter (83) being adapted to supply power from the direct current source connection (42) to the DC link (2); and
a direct current filter (583) connected electrically between the direct current source connection (42) and the direct-current converter (83), the direct current filter (583) comprising direct current filter capacitance.

8. A power supply assembly as claimed in claim 7 and referring to claim 6, wherein the control system (909) is adapted to provide a direct-current supply mode for the power supply assembly in which the bypass switch (155) is in a non-conducting state, and power is supplied to the load connection (71) from the direct current source connection (42) through the direct-current converter (83) and the load converter (81).

9. A power supply assembly as claimed in claim 7 or 8, wherein the pre-charging of the link capacitor system (3) comprises supplying power from the direct current source connection (42) to the link capacitor system (3).

10. A power supply assembly as claimed in claim 9, wherein the power supply assembly (101) comprises a direct current pre-charge system for pre-charging the link capacitor system (3) from the direct current source connection (42), the direct current pre-charge system comprises:
a main switch (13) for the direct-current converter (83) adapted to disconnect the direct current source connection (42) from the direct current filter (583);
a direct current pre-charge circuit (6-3) electrically connecting the direct current source connection (42) to the link capacitor system (3), the direct current pre-charge circuit (6-3) comprising a direct current pre-charge switch (14) adapted to disconnect the direct current source connection (42) from the link capacitor system (3), and a direct current limiting means adapted to limit a current supplied from the direct current source connection (42) to the link capacitor system (3) through the direct current pre-charge circuit (6-3).

11. A power supply assembly as claimed claim 10, wherein the pre-charging of the link capacitor system (3) comprises controlling the direct current pre-charge switch (14) to a conducting state while the main switch (13) for the direct-current converter (83) is in a non-conducting state for pre-charging the link capacitor system (3) from the direct current source connection (42) through the direct current pre-charge circuit (6-3).

12. A power supply assembly as claimed in any one of claims 7 - 11, wherein the start-up operation comprises, subsequent to controlling the main switch (13) for the direct-current converter (83) in a non- conducting state, and pre-charging the link capacitor system (3):
controlling the direct-current converter (83) to generate a preliminary direct voltage to the direct current filter (583);
controlling the main switch (13) for the direct-current converter (83) to a conducting state; and
controlling the direct current pre-charge switch (14) to a non-conducting state.

13. A power supply assembly as claimed in claim 12, wherein the preliminary direct voltage is greater than or equal to 80% of a voltage present at the direct current source connection (42).

14. A power supply assembly as claimed in any one of claims 1 to 13, wherein during the start-up operation, the link capacitor system (3) is pre-charged to a pre-charge link voltage greater than or equal to 80% of a peak voltage of a power source from which the link capacitor system (3) is pre-charged.
